# EUROPEAN PATENT SPECIFICATION

(11) **EP 2 514 998 B1**
(45) Date of publication and mention of the grant of the patent: **15.07.2015**
(21) Application number: 11305465.4
(22) Date of filing: 19.04.2011
(51) Int. Cl.: F16H 25/22

(54) **Ball screw assembly with recirculating cap**
Kugelspindelanordnung mit Umlaufdeckel
Ensemble formant vis sphérique doté d'un bouchon de recirculation

(43) Date of publication of application: 24.10.2012
(73) Proprietor: Aktiebolaget SKF, 41 550 Göteborg (SE)
(72) Inventor: Alleggri, Eric, 73800, Montmellian (FR); Durand, Christophe, 73000, Bassens (FR); Dubus, Jérôme, 37520, La Riche (FR); Lescorail, Romuald, 37380, Saint-Laurent-en-Gâtines (FR)
(74) Representative: Delprat, Olivier

(56) References cited:
- EP-A1- 2 218 942
- DE-A1- 10 108 641
- FR-A5- 2 181 341
- JP-A- 2002 349 663
- US-A- 3 661 030
- US-A- 3 924 486

## Description

The present invention relates to ball screw assemblies or devices. The ball screw assemblies may be, for example, used to displace loads by transforming rotary action into linear motion.

A ball screw assembly generally comprises a nut and an elongated cylindrical screw extending through an opening formed through the nut, the outer surface of said screw and the inner surface of said nut being provided with complementary threads. The assembly further comprises a plurality of balls engaged into both of the threads so as to provide a rolling engagement between the screw and the nut.

Patent application US-A1-2010/0170359 discloses such a conventional ball screw assembly which also comprises outer recirculating tubes for the balls. Each recirculating tube is formed by two assembled parts delimiting together deflecting channels and a return channel extending between said channels for the recirculation of the balls. The ball screw assembly further comprises holders to secure the recirculating tubes onto the outer surface of the nut.

With such a design, it is necessary to foresee the assembly of at least three parts in order to form and secure each of the recirculating tube. This leads to a complex structure of the ball screw assembly as well as an increase of the mounting cost.

Otherwise, in case of long nut, the manufacturing process of the recirculating tubes may be difficult and the dimension of the return channels may be not enough precise to achieve a good recirculation of the balls.

One aim of the present invention is to overcome these drawbacks.

A ball screw assembly according to the preamble of claim 1 is known from document US 3661030.

It is a particular object of the present invention to provide a ball screw device which is simple to manufacture and to assembly, economic while guaranteeing a good recirculation of the balls.

In one embodiment, the ball screw assembly comprises a screw provided with an outer thread, a nut provided with an inner thread and with first and second holes extending from said thread to an outer surface of said nut, a plurality of balls engaged in both of said outer and inner threads, and means for recirculating the balls between the first and second holes of the nut comprising a return channel. The recirculating means further comprise deflecting elements mounted into the first and second holes of the nut, each deflecting element delimiting a deflecting channel connected to the return channel. The recirculating means comprise a cap distinct from the deflecting elements, mounted on the nut and delimiting together with the outer surface of said nut the return channel. Only the cap comprises a concave raceway to delimit said return channel.

In one preferred embodiment, the convex outer surface of the nut partly delimits the return channel. Advantageously, the outer surface of the nut may be cylindrical. The cap may comprise an inner surface bearing against the outer surface of the nut and from which is formed the concave raceway. In one embodiment, the concave raceway comprises a groove. The concave raceway may have in cross-section a U-shape.

In one embodiment, at least the portion of the outer surface of the nut onto which the balls roll has a treatment surface.

The deflecting elements may protrude radially relative to the outer surface of the nut.

In one embodiment, the cap recovers the deflecting elements. Advantageously, the cap comprises recesses inside which protrude the deflecting elements. Alternatively, the cap may extend axially between the deflecting elements.

In one embodiment, the cap is screwed onto the nut. The cap may be formed from metal or plastic material.

The invention also relates to a linear actuator, according to claim 14, comprising a motor and a ball screw assembly as previously defined, the screw of said assembly being connected to the motor.

The present invention and its advantages will be better understood by studying the detailed description of a specific embodiment given by way of non-limiting example and illustrated by the appended drawings on which:
- Figure 1 is an axial section of a ball screw assembly according to an example of the invention,
- Figure 2 is an exploded perspective view of Figure 1,
- Figure 3 is a perspective view of Figure 1 without an outer cap,
- Figures 4 and 5 are views in radial section of the assembly on IV-IV and V-V of Figure 1,
- Figure 6 is a perspective view of a nut of the assembly of Figure 1,
- Figure 7 is an under view of an outer cap of the assembly of Figure 1,
- Figure 8 is a view in axial section of the outer cap on VIII-VIII of Figure 7, and
- Figure 9 is an axial section of a linear actuator according to an example of the invention.

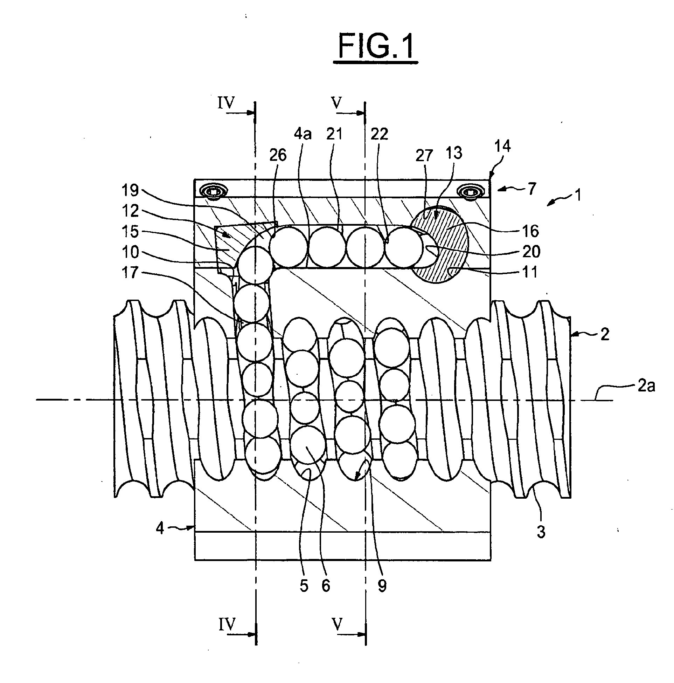

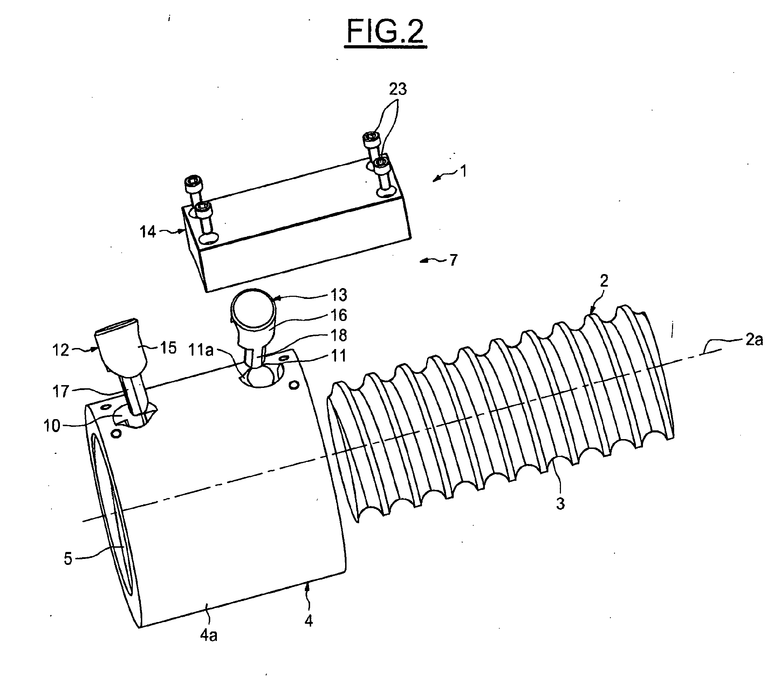

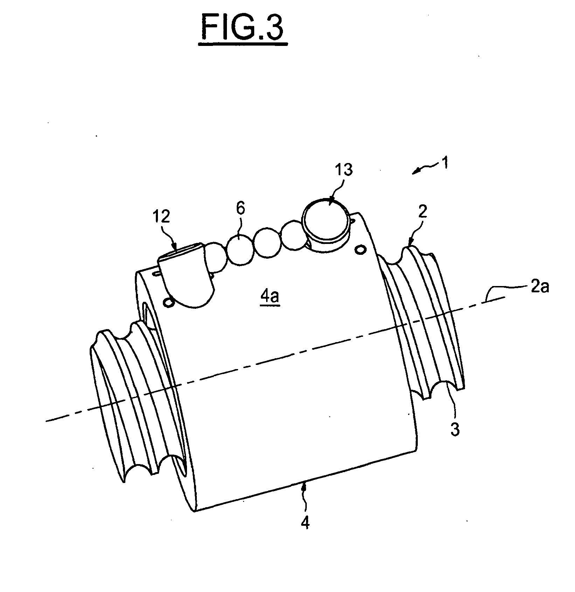

As illustrated on the Figures 1 to 3, which illustrate an embodiment of a ball screw device or assembly 1 according to the invention, the assembly comprises a screw 2 having an outer thread 3, a cylindrical nut 4 having an inner thread 5 whose internal diameter is bigger than the external diameter of the outer thread 3, a plurality of spherical balls 6 for connecting the screw to the nut, and ball recirculating means 7 mounted on the nut. The screw 2 extends along a longitudinal axis 2a through a cylindrical opening of the nut from which is formed the inner thread 5.

Some balls 6 are respectively engaged partly in the outer thread 3 of the screw and partly in the inner thread 5 of the nut. Said balls are engaged on a circulating path 9 of the nut which can be formed along several spires of the outer thread 5. A rotation of the nut 4 relative to the screw 2 is transformed into a longitudinal linear movement along the axis 2a of said screw with respect to the nut because the balls 6 radially disposed therebetween roll along the inner and outer threads 3 and 5 by following the path 9 in the nut. Alternatively, a rotation of the screw 2 relative to the nut 4 causes the translational movement of said nut.

The nut 4 comprises two stepped holes 10, 11 which extend from a cylindrical outer surface 4a of said nut and open into the inner thread 5. The holes 10, 11 extend through the thickness of the nut 4. In the illustrated embodiment, the holes 10, 11 are tilted with respect to a vertical plane in order to be connected tangentially with the inner thread 5 of the nut. The holes 10, 11 extend along two opposite directions.

The recirculating means 7 comprise two deflecting elements or pins 12, 13 mounted into the holes 10, 11 of the nut and an outer cap 14 mounted on the outer surface 4a of said nut.

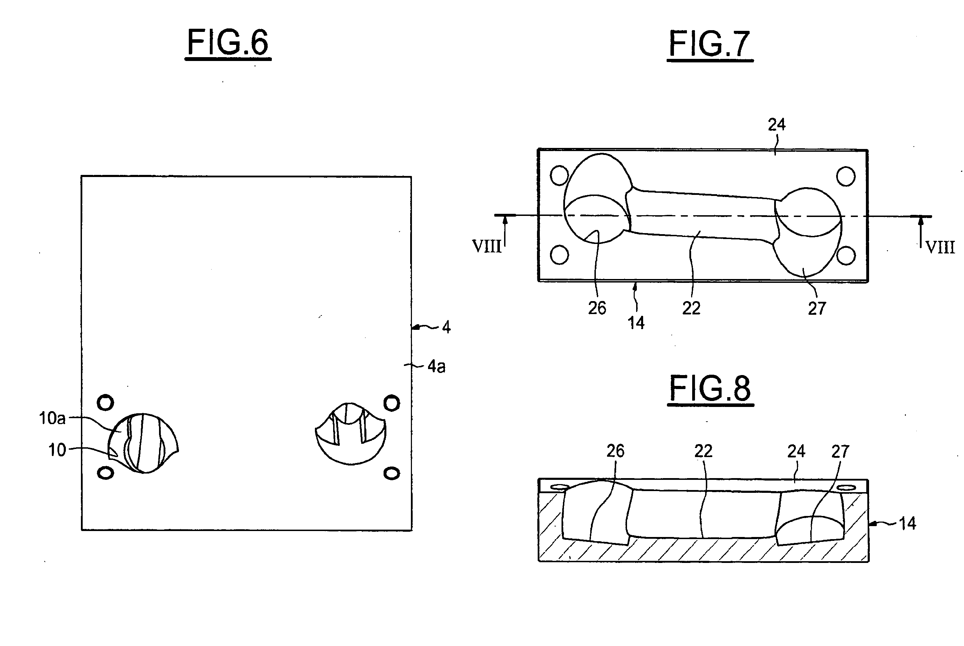

The deflecting pins 12, 13 are identical to one another and separated or distinct from the nut 4. Each deflecting pin 12, 13 is made in one part and may be made from plastic material or metal, for instance by moulding. Each deflecting pin 12, 13 comprises a cylindrical mounting part 15, 16 mounted in the respective stepped hole 10, 11 and a pick-up and release lug 17, 18 extending from a lower surface of said mounting part. The deflecting pins 12, 13 may be mounted into the corresponding stepped holes 10, 11 from the outside of the nut 4, the lower surfaces of the mounting parts 15, 16 abutting against shoulders 10a, 11a (Figure 6) of said holes. The mounting part 15, 16 is located partly inside the corresponding hole 10, 11 and protrudes radially outside relative to the outer surface 4a of the nut.

The pick-up and release lug 17, 18 of each deflecting pin extends radially inwards inside the corresponding hole 10, 11 and across the gap between the outer thread 3 of the screw and the inner thread 5 of the nut. Each lug 17, 18 is mounted into contact with the hole 10, 11 in the circumferential direction and engages into the outer thread 3 of the screw while remaining at a small distance from the flanks of said thread.

Each of the deflecting pin 12, 13 delimits together with the respective hole 10, 11 a deflecting channel 19, 20 for the balls. Each of the mounting parts 15, 16 comprises a curved guiding groove to form with surfaces of the associated hole 10, 11 opposed lateral parts of said channel. For each deflecting channel 19 and 20, a first end is formed by the free end of the lug 17, 18 inserted into the outer thread 3 of the screw, the second end being delimited by the curved groove of the mounting part 15, 16 and the associated hole 10, 11. The first end of each deflecting channel 19, 20 is tangent to the outer thread 3 of the screw and to the balls 6. The first end of each deflecting channel 19, 20 is connected to one end of the circulating path 9 provided between the screw 2 and the nut 4. At one end of the circulating path 9, the balls 6 meet the lug of one of the deflecting pins 12, 13 and are pick-up or extracted from the circulating path and deviated toward the corresponding deflecting channel 19, 20. At the other end of the circulating path 9, the lug of the other deflecting pin 12, 13 reintroduces or releases the balls 6. Each ball 6 makes at least 180° trajectory when passing through the deflecting pins 12 and 13.

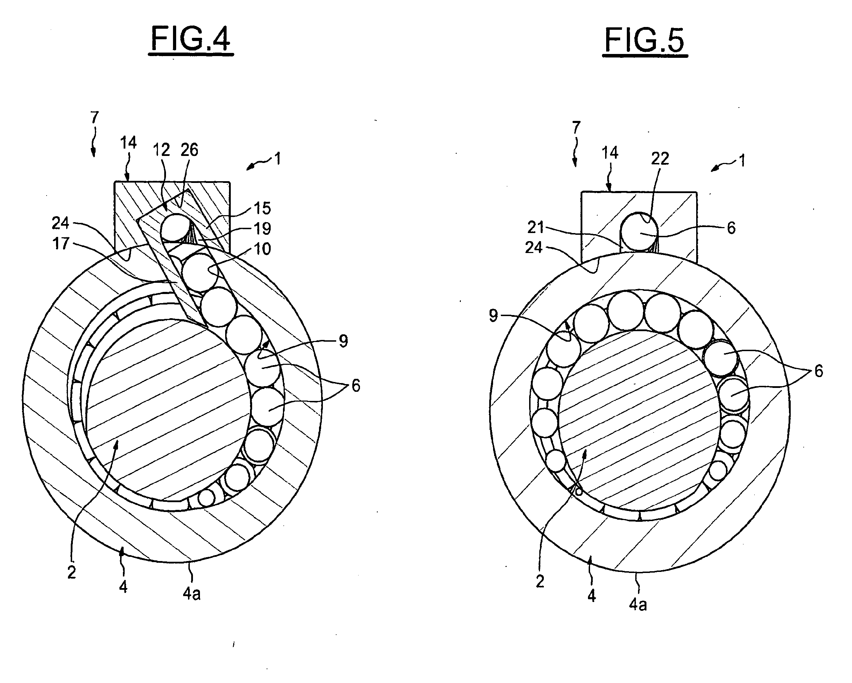

As shown on Figures 1, 2, 4 and 5, the cap 14 delimits together with the outer surface 4a of the nut a straight return channel 21. The return channel 21 is aligned and connected with the second end of the deflecting channels 19, 20. The return channel 21 is connected to the deflecting channels 19, 20 and extends therebetween. The curved deflecting channels 19, 20 and the straight return channel 21 define a recirculation channel for the balls 6 extending from one end to the other end of the circulating path 9 provided between the screw 2 and the nut 4. In the illustrated embodiment, the return channel 21 extends along an axis which does not lie along the longitudinal plane of the assembly containing the axis 2a of the screw.

The return channel 21 is delimited by a groove 22 provided on the outer cap 14 and the portion of outer surface 4a of the nut which radially faces said groove. Said portion of the nut 4 forms a track or raceway for the balls 6 extending between the holes 10, 11. The balls 6 thus roll directly on the outer surface 4a of the nut. In the illustrated embodiment, the raceway formed by the outer surface 4a of the nut has in cross-section a convex profile. Alternatively, it might be possible to foresee a flat part on the outer surface 4a to form the rolling surface for the balls 6. Advantageously, at least the portion of the outer surface 4a forming the raceway for the balls may have a treatment surface. For instance, said portion may be ground and optionally lapped.

The cap 14 is separated or distinct from the nut 4 and from the deflecting pins 12, 13. The cap may be made from metal for example by machining with removal of material from metal bar stock. Alternatively, the cap 14 may be made from plastic material and obtained by moulding. The outer cap 14 is secured on the outer surface 4a of the nut by screws 23. The fixation of the cap 14 on the nut 4 may be obtained by any other suitable fixing means, for example by gluing.

The outer cap 14 has a parallelepiped form and entirely recovers the deflecting pins 12, 13 and the portion of the outer surface 4a of the nut forming the raceway for the balls 6. The cap 14 comprises a concave inner surface 24 radially bearing against the outer surface 4a of the nut and having a complementary shape. The groove 22 is provided on the inner surface 24 and extends along said surface. The groove 22 is directed radially inwards and forms a straight track or raceway for the balls 6. The groove 22 forming a concave raceway delimits together with the outer surface 4a of the nut the straight return channel 21.

In the illustrated embodiment, the groove 22 of the cap has in cross-section a U-shape. The groove 22 comprises a bottom having in cross-section a profile in the shape of an arc of circle adapted to the dimension of the balls 6, said bottom being extended by two parallel flat guiding walls connected to the inner surface 24. Advantageously, the radius of curvature of the bottom of the groove 22 is slightly greater than the radius of the balls 6. Alternatively, the groove 22 may have in cross-section another concave internal profile adapted to the balls 6. For instance, the groove may have in cross-section a U-shape with a flat bottom, or a profile in the shape of a semi-circle.

By providing a return channel 21 radially between the outer surface 4a of the nut 4 and the outer cap 14, the recirculation of the balls 6 is achieved in a simple, precise and economic way even in case of axial long nut. Besides, only the cap 14 comprises a concave raceway to delimit the return channel 21 for the balls. The raceway of the cap 14 is the only concave raceway foreseen to this end. Thus, the concave raceway foreseen to partly delimit the return channel 21 is fully formed on the cap 14. There is no concave raceway provided on the outer surface 4a of the nut in order to delimit the return channel 21. Therefore, the number of machining operations to be done on the nut 4 is reduced. In the illustrated embodiment, the groove 22 is formed on the cap 14 to form the concave raceway for the balls. Alternatively, it might also be possible to foresee a cap having a tubular shape in order to form a concave raceway for the balls.

As clearly shown on Figures 7 and 8, the cap 14 also comprises two recesses 26, 27 provided on the inner surface 24, each recess being disposed and communicating with one end of the groove 22. Each recess is adapted to receive the portion of the mounting part 15, 16 of the deflecting pin which protrudes outwards relative to the outer surface 4a of the nut and has a complementary shape. The cap 14 enables to avoid an escape of the deflecting pins 12, 13 radially outside of the nut.

In the illustrated embodiment, the cap 14 recovers radially the deflecting pins 12, 13. Alternatively, it could be possible to foresee a cap with a reduced axial dimension and which extends axially between said deflecting pins. In this case, it is necessary to foresee fixing means for fixing the deflecting pins 12, 13 in the holes 10, 11 for example by gluing, screwing, clipping, etc.

In another variant, it could also be possible to have more pairs of holes and associated deflecting pins on the nut cooperating with the return channel. Alternatively, it could again be possible to have a straight return channel which extends axially with regard to the axis of the screw and lies along the longitudinal plane of the ball screw assembly containing said axis.

In the illustrated embodiment, each deflecting pin delimits together with surfaces of the associated hole a deflecting channel for the balls. Alternatively, it might also be possible to foresee deflecting channel entirely formed by the deflecting pins.

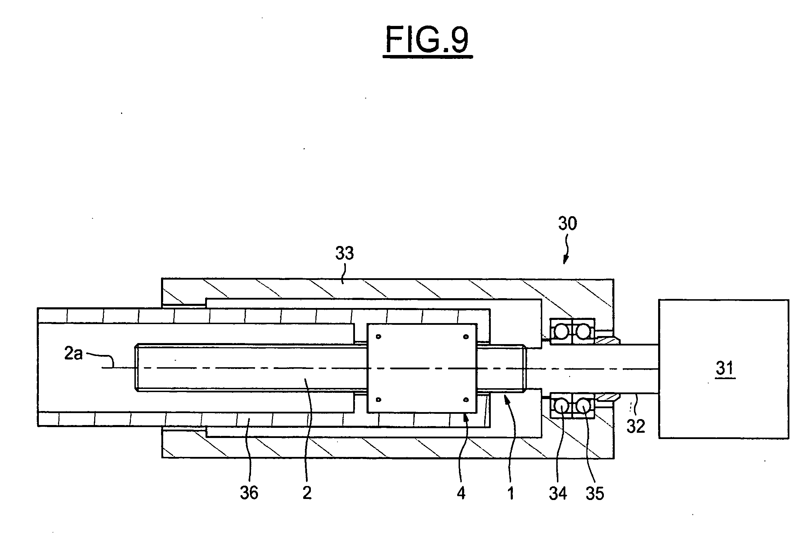

Referring to Figure 9, it will be now described a specific application of the ball screw assembly 1 into a linear actuator. The actuator 30 comprises a driving motor 31 having an output shaft 32 connected by suitable means (not shown) to the screw 2 of the assembly. The shaft 32 and the screw 2 are mounted into a housing 33 of the actuator by two rolling bearings 34, 35, the nut 4 of the assembly carrying a tubular sleeve 36 which may be used to displace loads. When the shaft 32 and the screw 2 rotate, the sleeve 36 translates along the axis 2a.

## Claims

1. Ball screw assembly comprising a screw (2) provided with an outer thread, a nut (4) provided with an inner thread and with first and second holes (10, 11) extending from said thread to an outer surface (4a) of said nut, a plurality of balls (6) engaged in both of said outer and inner threads, and means (7) for recirculating the balls between the first and second holes of the nut comprising a return channel (21) and deflecting elements (12, 13) mounted into the first and second holes (10, 11) of the nut, each deflecting element delimiting a deflecting channel (19, 20) connected to the return channel (21), **characterized in that** the recirculating means comprise a cap (14) distinct from the deflecting elements (12, 13), mounted on the nut and delimiting together with the outer surface (4a) of said nut the return channel (21), only the cap comprising a concave raceway (22) to delimit said return channel.

2. Ball screw assembly according to claim 1, wherein the convex outer surface (4a) of the nut partly delimits the return channel.

3. Ball screw assembly according to claim 2, wherein the outer surface (4a) of the nut is cylindrical.

4. Ball screw assembly according to any of the preceding claims, wherein the concave raceway (22) comprises a groove.

5. Ball screw assembly according to any of the preceding claims, wherein the cap comprises an inner surface (24) bearing against the outer surface (4a) of the nut and from which is formed the concave raceway (22).

6. Ball screw assembly according to any of the preceding claims, wherein the concave raceway (22) has in cross-section a U-shape.

7. Ball screw assembly according to any of the preceding claims, wherein at least the portion of the outer surface (4a) of the nut onto which the balls roll has a treatment surface.

8. Ball screw assembly according to any of the preceding claims, wherein the deflecting elements (12, 13) protrude radially relative to the outer surface (4a) of the nut.

9. Ball screw assembly according to any of the preceding claims, wherein the cap (14) recovers the deflecting elements (12, 13).

10. Ball screw assembly according to any of the preceding claims, wherein the cap comprises recesses (26, 27) inside which protrude the deflecting elements (12, 13).

11. Ball screw assembly according to any of the preceding claims 1 to 9, wherein the cap extends axially between the deflecting elements (12, 13).

12. Ball screw assembly according to any of the preceding claims, wherein the cap (14) is screwed onto the nut (4).

13. Ball screw assembly according to any of the preceding claims, wherein the cap is formed from metal or plastic material.

14. Linear actuator comprising a motor and a ball screw assembly according to any of the preceding claims, the screw of said assembly being connected to the motor.

## Patentansprüche

1. Kugelgewindeanordnung, umfassend eine Spindel (2), die mit einem Außengewinde versehen ist, eine Mutter (4), die mit einem Innengewinde und mit einem ersten und einem zweiten Loch (10, 11) versehen ist, die sich von dem Gewinde zu einer Außenfläche (4a) der Mutter erstrecken, mehrere Kugeln (6), die sowohl in dem Außen- als auch in dem Innengewinde in Eingriff stehen, und Mittel (7) zum Rezirkulieren der Kugeln zwischen dem ersten und dem zweiten Loch der Mutter, die einen Rückführkanal (21) und Ablenkelemente (12, 13) umfassen, die im ersten und zweiten Loch (10, 11) der Mutter montiert sind und jeweils einen Ablenkkanal (19, 20) begrenzen, der mit dem Rückführkanal (21) verbunden ist, **dadurch gekennzeichnet, dass** die Rezirkulierungsmittel einen von den Ablenkelementen (12, 13) separaten Deckel (14) umfassen, der an der Mutter montiert ist und zusammen mit der Außenfläche (4a) der Mutter den Rückführkanal (21) begrenzt, wobei nur der Deckel eine konkave Laufbahn (22) zur Begrenzung des Rückführkanals umfasst.

2. Kugelgewindeanordnung nach Anspruch 1, wobei die konvexe Außenfläche (4a) der Mutter den Rückführkanal teilweise begrenzt.

3. Kugelgewindeanordnung nach Anspruch 2, wobei die Außenfläche (4a) der Mutter zylindrisch ist.

4. Kugelgewindeanordnung nach einem der vorhergehenden Ansprüche, wobei die konkave Laufbahn (22) eine Nut umfasst.

5. Kugelgewindeanordnung nach einem der vorhergehenden Ansprüche, wobei der Deckel eine Innenfläche (24) umfasst, die an der Außenfläche (4a) der Mutter anliegt und aus der die konkave Laufbahn (22) gebildet ist.

6. Kugelgewindeanordnung nach einem der vorhergehenden Ansprüche, wobei die konkave Laufbahn (22) im Querschnitt U-förmig ist.

7. Kugelgewindeanordnung nach einem der vorhergehenden Ansprüche, wobei mindestens der Abschnitt der Außenfläche (4a) der Mutter, auf dem die Kugeln rollen, eine Behandlungsoberfläche hat.

8. Kugelgewindeanordnung nach einem der vorhergehenden Ansprüche, wobei die Ablenkelemente (12, 13) bezüglich der Außenfläche (4a) der Mutter radial vorragen.

9. Kugelgewindeanordnung nach einem der vorhergehenden Ansprüche, wobei der Deckel (14) die Ablenkelemente (12, 13) abdeckt.

10. Kugelgewindeanordnung nach einem der vorhergehenden Ansprüche, wobei der Deckel Aussparungen (26, 27) umfasst, in denen die Ablenkelemente (12, 13) vorragen.

11. Kugelgewindeanordnung nach einem der vorhergehenden Ansprüche 1 bis 9, wobei sich der Deckel axial zwischen den Ablenkelementen (12, 13) erstreckt.

12. Kugelgewindeanordnung nach einem der vorhergehenden Ansprüche, wobei der Deckel (14) auf die Mutter (4) aufgeschraubt ist.

13. Kugelgewindeanordnung nach einem der vorhergehenden Ansprüche, wobei der Deckel aus Metall oder Kunststoffmaterial gebildet ist.

14. Linearaktuator, umfassend einen Motor und eine Kugelgewindeanordnung nach einem der vorhergehenden Ansprüche, wobei die Spindel der Anordnung mit dem Motor verbunden ist.

## Revendications

1. Ensemble de vis à billes comprenant une vis (2) pourvue d'un filetage extérieur, un écrou (4) pourvu d'un filetage intérieur et d'un premier et un deuxième trou (10, 11) s'étendant dudit filetage jusqu'à une surface extérieure (4a) dudit écrou, une pluralité de billes (6) engagées dans les filetages extérieur et intérieur, et des moyens (7) de recirculation des billes entre les premier et deuxième trous de l'écrou comprenant un canal de retour (21) et des éléments de déviation (12, 13) montés dans les premier et deuxième trous (10, 11) de l'écrou, chaque élément de déviation délimitant un canal de déviation (19, 20) relié au canal de retour (21), **caractérisé en ce que** les moyens de recirculation comprennent un capot (14) distinct des éléments de déviation (12, 13), monté sur l'écrou et qui délimite avec la surface extérieure (4a) dudit écrou le canal de retour (21), seul le capot comprenant un chemin de roulement concave (22) pour délimiter ledit canal de retour.

2. Ensemble de vis à billes selon la revendication 1, dans lequel la surface extérieure convexe (4a) de l'écrou délimite partiellement le canal de retour.

3. Ensemble de vis à billes selon la revendication 2, dans lequel la surface extérieure (4a) de l'écrou est cylindrique.

4. Ensemble de vis à billes selon l'une quelconque des revendications précédentes, dans lequel le chemin de roulement concave (22) comprend une rainure.

5. Ensemble de vis à billes selon l'une quelconque des revendications précédentes, dans lequel le capot comprend une surface intérieure (24) en appui sur la surface extérieure (4a) de l'écrou et à partir de laquelle est formé le chemin de roulement concave (22).

6. Ensemble de vis à billes selon l'une quelconque des revendications précédentes, dans lequel le chemin de roulement concave (22) présente une forme de U en section transversale.

7. Ensemble de vis à billes selon l'une quelconque des revendications précédentes, dans lequel au moins la partie de la surface extérieure (4a) de l'écrou sur laquelle roulent les billes a un traitement de surface.

8. Ensemble de vis à billes selon l'une quelconque des revendications précédentes, dans lequel les éléments de déviation (12, 13) font saillie radialement par rapport à la surface extérieure (4a) de l'écrou.

9. Ensemble de vis à billes selon l'une quelconque des revendications précédentes, dans lequel le capot (14) recouvre les éléments de déviation (12, 13).

10. Ensemble de vis à billes selon l'une quelconque des revendications précédentes, dans lequel le capot comprend des évidements (26, 27) à l'intérieur desquels font saillie les éléments de déviation (12, 13).

11. Ensemble de vis à billes selon l'une quelconque des revendications 1 à 9, dans lequel le capot s'étend axialement entre les éléments de déviation (12, 13).

12. Ensemble de vis à billes selon l'une quelconque des revendications précédentes, dans lequel le capot (14) est vissé sur l'écrou (4).

13. Ensemble de vis à billes selon l'une quelconque des revendications précédentes, dans lequel le capot est en métal ou en matière plastique.

14. Actionneur linéaire comprenant un moteur et un ensemble de vis à billes selon l'une quelconque des revendications précédentes, la vis dudit ensemble étant connectée au moteur.
